# EUROPÄISCHE PATENTANMELDUNG

(11) **EP 1 876 549 A1**
(43) Veröffentlichungstag der Anmeldung: **09.01.2008**
(21) Anmeldenummer: 06116806.8
(22) Anmeldetag: 07.07.2006
(51) Int. Cl.: G06F 21/00, H04L 29/06

(54) **Verfahren und System zur verschlüsselten Datenübertragung**

(71) Anmelder: Swisscom Mobile AG, 3050 Bern (CH)
(72) Erfinder: Danzeisen, Marc, CH - 3063 Ittigen (CH); Winiker, Simon, CH - 3014 Bern (CH); Linder, Jan, CH - 3013 Bern (CH); Baumgartner, Florian, 3008, Bern (CH)
(74) Vertreter: Scheuzger, Beat Otto

(57) **Zusammenfassung**

Die vorliegende Erfindung bezieht sich auf ein Verfahren und ein System zur selektierbaren Datenübertragung. Es werden Authentisierungsdaten (A) und ein elektronischer Schlüssel (S) erzeugt, wobei der elektronische Schlüssel (S) den Authentisierungsdaten (A) zugeordnet abgespeichert wird. Mittels eines Verschlüsselungsmoduls eines Zentralmoduls (10) und mittels mindestens eines Teils des elektronischen Schlüssels (S) werden Daten (D) in verschlüsselte Daten (vD) verschlüsselt. Es wird eine Signalisierungsmeldung (sM) an ein erstes Kommunikationsendgerät (mPh) übertragen. Mittels des ersten Kommunikationsendgeräts (mPh) wird ein zweites Kommunikationsendgerät (hC,mC,oC) ausgewählt. Die verschlüsselten Daten (vD) werden auf der Identifikation des selektierten zweiten Kommunikationsendgeräts an das zweite Kommunikationsendgerät (hC,mC,oC) übertragen. Mittels eines Authentisierungsmoduls des Zentralmoduls (10) wird mindestens ein Teil des elektronischen Schlüssels (S) auf das zweite Kommunikationsendgerät (hC,mC,oC) übertragen. Mittels eines Entschlüsselungsmoduls des zweiten Kommunikationsendgeräts (hC,mC,oC) und mittels des mindestens einen Teils des elektronischen Schlüssels (S) werden die verschlüsselten Daten (vD) entschlüsselt.

## Beschreibung

### Technisches Gebiet

Die vorliegende Erfindung bezieht sich auf ein Verfahren und ein System zur selektierbaren Datenübertragung.

### Stand der Technik

Im Stand der Technik wird oft von einem Terminal aus, also z.B. von einem Computer eines Benutzers, auf Daten, welche in einem Netzwerk vorhanden sind, also z.B. auf Daten welche auf einem Netzwerkserver abgespeichert sind, zugegriffen. So kann ein Benutzer beispielsweise ein Terminal dazu benutzen, um E-Mail Nachrichten, welche auf einem E-Mail Server abgespeichert sind, abzurufen. Für die Übertragung von Daten zwischen einem Server und einem Terminal sind im Stand der Technik unterschiedliche Verfahren bekannt. So sind Verfahren bekannt, welche besonders geeignet sind, um E-Mail Nachrichten oder aktuelle Schlagzeilen zu übertragen. Oder es sind Verfahren bekannt, um Multimediadaten, wie Audiodaten oder Videodaten, von einem Netzwerkserver auf ein Terminal zu übertragen. Solche Verfahren können beispielsweise auf Protokollen wie POP (Post Office Protocol), IMAP (Internet Message Access Protocol), FTP (File Transfer Protocol), SMB (Server Message Block) oder auf irgendwelchen anderen Protokollen basieren.

Bevor Daten übertragen werden, kann überprüft werden, ob ein Benutzer über eine Berechtigung am Zugriff auf die entsprechenden Daten verfügt. So wird beispielsweise vor dem Zugriff auf E-Mail Nachrichten oder vor dem Herunterladen einer Audiodatei beispielsweise mittels eines Benutzernamens und eines Passworts die Identität eines Benutzers überprüft, oder, mit anderen Worten, es wird eine Authentisierung durchgeführt. Eine solche Authentisierung kann beispielsweise auch auf der Erstellung einer gesicherten Datenverbindung, wie beispielsweise einer VPN Verbindung (VPN: Virtual Private Network), basieren. Nach der Überprüfung der Identität des Benutzers werden entsprechende Daten auf das Terminal des Benutzers übertragen, worauf die Daten auf diesem Terminal dem Benutzer zur Verfügung stehen.

Je nach Art der Daten und je nach Art des Terminals, kann es jedoch für den Benutzer problematisch sein, auf die Daten zuzugreifen. So kann für den Zugriff auf die Daten beispielsweise eine spezielle Software erforderlich sein. Oder es kann erforderlich sein, dass das Terminal über bestimmte Leistungsmerkmale, wie beispielsweise einen besonders leistungsfähigen Prozessor, einen besonders gut auflösenden Bildschirm, besondere Eingabeeinrichtungen wie eine präzise Maus oder einen Joystick oder über irgendwelche andere Eingabe-/Ausgabeeinrichtungen verfügt, um diese Daten auf dem Terminal anzuzeigen oder darzustellen. Oft verfügt ein Benutzer über verschiedene Terminals, so z.B. über ein Terminal zu Hause, über ein mobiles Terminal oder über ein Terminal am Arbeitsplatz, wobei diese Terminals oft auch unterschiedliche Leistungsmerkmale bezüglich der Netzwerkbandbreite, der Prozessorleistung oder der Bildschirmauflösung aufweisen. Nachdem der Benutzer mit einem Terminal eine Authentisierung durchgeführt hat und somit berechtigt ist, bestimmte Daten, wie beispielsweise E-Mail Nachrichten oder Videodaten, auf das Terminal zu übertragen, wäre es für den Benutzer oft günstig, ein bestimmtes Terminal zu selektieren, um die Daten auf dieses Terminal zu übertragen. So kann es günstig sein, dass eine E-Mail Nachricht mit einer Videodatei besser auf das Terminal zu Hause übertragen wird oder dass eine E-Mail Nachricht mit einer Präsentation besser auf das Terminal am Arbeitsplatz übertragen wird. Um im Stand der Technik eine solche Übertragung der Daten durchzuführen, muss sich der Benutzer mit dem jeweiligen Terminal authentisieren und anschliessend die Übertragung der Daten auf das Terminal auslösen. Im Stand der Technik werden Daten vom Benutzer auf dasselbe Terminal heruntergeladen, auf welchem auch die Darstellung der Daten erfolgt.

Im Stand der Technik ist die Übertragung von Daten von beispielsweise einem Server auf ein Terminal eines Benutzers aus den angesprochenen Gründen mit verschiedenen Nachteilen behaftet. Selbstverständlich könnte ein Benutzer Daten zuerst auf ein Terminal herunterladen, auf könnte ein Benutzer Daten zuerst auf ein Terminal herunterladen, auf welchem der Benutzer gerade arbeitet und diese Daten anschliessend an ein bevorzugtes Terminal weiterübertragen. Allerdings ist eine solche Übertragung kompliziert und allenfalls, beispielsweise wegen mangelnder Kapazität der Netzwerkschnittstelle des Terminals, wie beispielsweise der Kapazität der Netzwerkschnittstelle eines mobilen Terminals, gar nicht durchführbar. Ohne zusätzliche Authentisierungsmechanismen wären zudem die an das bevorzugte Terminal übertragenen Daten für einen Dritten, welcher dieses Terminal gerade benutzt, ohne weiteres einsehbar.

Das Dokument WO 2005/020541 offenbart ein Verfahren zur sicheren Übermittlung eines Content von einem Content Server zu einem Content Consumer. Ein Content Requestor sendet Instruktionen, sodass ein Content Access Codes an den Content Consumer übermittelt wird. Aufgrund des Content Access Codes wird vom Content Server eine Anfrage zur Verschlüsselung eines Content und zum Herunterladen des verschlüsselten Content an den Content Server gesendet.

Das Dokument WO 01/11883 offenbart ein Verfahren zur sicheren Verbreitung eines Content. Ein Content Provider stellt einen Content einem Service Provider zur Verfügung. Der Service Provider stellt den Content mindestens einem Content Consumer zur Verfügung. Zwischen dem Content Provider und den Service Provider sowie zwischen dem Service Provider und mindestens einem Content Consumer kann je eine vertrauensbasierte Beziehung bestehen, sodass der Content sowohl bei der Übertragung als auch beim Empfang innerhalb eines Broadcast- oder Multicast Netzwerks geschützt ist.

### Offenbarung der Erfindung

Es ist eine Aufgabe der vorliegenden Erfindung, ein neues Verfahren und ein neues System zur selektierbaren Datenübertragung vorzuschlagen, welches Verfahren und welches System nicht die Nachteile des Standes der Technik aufweisen.

Gemäss der vorliegenden Erfindung werden diese Ziele insbesondere durch die Elemente der unabhängigen Ansprüche erreicht. Weitere Authentisierungsdaten zwischen dem ersten und/oder dem zweiten und/oder einem dritten Kommunikationsendgerät und einem Authentisierungsmodul des Zentralmoduls mindestens ein Teil des elektronischen Schlüssels auf das zweite Kommunikationsendgerät übertragen wird, und dass mittels eines Entschlüsselungsmoduls des zweiten Kommunikationsendgeräts und mittels des mindestens einen Teils des elektronischen Schlüssels die verschlüsselten Daten entschlüsselt werden. Ein solches Verfahren hat insbesondere den Vorteil, dass eine selektierbare Datenübertragung durchgeführt werden kann, wobei ein Benutzer selektieren kann, auf welches Kommunikationsendgerät Daten übertragen werden sollen, und wobei sichergestellt ist, dass nur berechtigte Personen auf die übertragenen Daten zugreifen können. Eine solche selektierbare Datenübertragung kann sich beispielsweise auch auf eine Übertragung eines Video-Streams oder eines Video-Calls beziehen, sodass beispielsweise der Benutzer auf dem ersten Kommunikationsendgerät die Mitteilung erhält, dass Daten betreffend eines Video-Streams bereitstehen, dass der Benutzer mittels des ersten Kommunikationsendgeräts ein zweites Kommunikationsendgerät selektiert, dass der verschlüsselte Video-Stream an das zweite Kommunikationsendgerät geleitet wird, dass mittels des ersten oder zweiten Kommunikationsendgeräts eine Authentisierung durchgeführt wird, und dass der elektronische Schlüssel zur Entschlüsselung des Video-Streams auf das zweite Kommunikationsendgerät übertragen wird.

In einer Ausführungsvariante wird der elektronische Schlüssel basierend auf der an das Übertragungsmodul des Zentralmoduls übertragenen Identifikation des zweiten Kommunikationsendgeräts erzeugt und/oder es wird basierend auf der an das Übertragungsmodul des Zentralmoduls übertragenen Identifikation ein Verschlüsselungsalgorithmus des Verschlüsselungsmoduls selektiert. Das Verschlüsslungsmodul kann über mehrere unterschiedliche Verschlüsselungsalgorithmen verfügen. Je nach erzeugtem elektronischem Schlüssel kann ein für diesen Schlüssel geeigneter Verschlüsselungsalgorithmus verwendet werden. Oder es kann je nach Identifikation des zweiten Kommunikationsendgeräts ein diesem Kommunikationsendgerät besonders gut angepasster Verschlüsselungsalgorithmus selektiert werden. So kann je nach zweitem Kommunikationsendgerät ein anderer elektronischer Schlüssel verwendet werden. Es kann, falls z.B. das zweite Kommunikationsendgerät ein Computer in einer Firma ist, ein elektronischer Schlüssel verwendet werden, welcher eine hohe Sicherheit bietet. Oder es kann, falls z.B. das zweite Kommunikationsendgerät ein mobiler Computer ist, ein elektronischer Schlüssel verwendet werden, welcher eine effiziente Entschlüsselung ermöglicht. Ein solches Verfahren hat insbesondere den Vorteil, dass die verschlüsselten Daten dem zweiten Kommunikationsendgerät angepasst werden können.

In einer anderen Ausführungsvariante wird der mindestens eine Teil des elektronischen Schlüssels über eine Kommunikationsverbindung zwischen dem Zentralmodul und dem ersten Kommunikationsendgerät sowie über eine Kommunikationsverbindung zwischen dem ersten Kommunikationsendgerät und dem zweiten Kommunikationsendgerät übertragen. Diese Ausführungsvariante ist beispielsweise sinnvoll, falls das erste Kommunikationsendgerät ein in einem Mobilfunknetz einbuchbares und authentisierbares Mobilfunkendgerät ist. So kann der elektronische Schlüssel, beispielsweise nachdem der Benutzer mit dem Mobilfunkendgerät ein zweites Kommunikationsendgerät selektiert hat und nachdem die Daten verschlüsselt worden sind, an das Mobilfunkendgerät des Benutzers übertragen werden. Anschliessend können die verschlüsselten Daten an das zweite Kommunikationsendgerät übertragen werden. Sobald der Benutzer mit dem zweiten Kommunikationsendgerät auf die verschlüsselten Daten zugreifen möchte, kann der elektronische Schlüssel vom Mobilfunkendgerät auf das zweite Kommunikationsendgerät, beispielsweise über eine drahtlose Kommunikationsverbindung zwischen dem Mobilfunkgerät und dem zweiten Kommunikationsendgerät, übertragen werden. Ein solches Verfahren hat insbesondere den Vorteil, dass der elektronische Schlüssel zur Entschlüsselung der verschlüsselten Daten immer unter der Kontrolle des Benutzers bleibt und dem Benutzer einfach verfügbar ist.

In einer Ausführungsvariante wird im Zentralmodul ein Benutzerprofil abgespeichert, wobei Daten gemäss dem Benutzerprofil verschlüsselt werden. So kann im Benutzerprofil abgespeichert sein, dass beispielsweise die neuesten Bestelldaten eines Produkts oder die neuesten E-Mail Nachrichten an den Benutzer verschlüsselt werden, wobei anschliessend eine entsprechende Signalisierungsmeldung an ein erstes Kommunikationsendgerät des Benutzers übermittelt wird. Ein solches Verfahren hat insbesondere den Vorteil, dass die Verschlüsselung und Übertragung von Daten gemäss Vorgaben des Benutzers automatisiert werden kann.

In einer anderen Ausführungsvariante wird mittels eines Verfügbarkeitsmoduls des Zentralmoduls die Verfügbarkeit des zweiten Kommunikationsendgeräts überprüft und die verschlüsselten Daten werden bei Verfügbarkeit des zweiten Kommunikationsendgeräts an das zweite Kommunikationsendgerät übertragen. Dabei kann Verfügbarkeit bedeuten, dass eine Netzwerkschnittstelle des zweiten Kommunikationsendgeräts empfangsbereit ist. Verfügbarkeit kann aber auch bedeuten, dass die Kommunikationsverbindung zwischen dem Übertragungsmodul und dem zweiten Kommunikationsendgerät infolge einer zu hohen Netzwerkauslastung der entsprechenden Netzwerke als nicht verfügbar klassiert wird. Ein solches Verfahren hat insbesondere den Vorteil, dass die verschlüsselten Daten zum frühestens möglichen Zeitpunkt oder bei einer definierbaren Auslastung von Netzwerken an das zweite Kommunikationsendgerät übermittelt werden können.

In einer anderen Ausführungsvariante werden die verschlüsselten Daten an ein Netzwerkgerät einer Netzwerkinfrastruktur übertragen, wobei die verschlüsselten Daten auf dem Netzwerkgerät abgespeichert werden und asynchron vom Netzwerkgerät an das zweite Kommunikationsendgerät übertragen werden. So kann sich das Netzwerkgerät beispielsweise auf einen an einem ADSL Modem angeschlossenen Netzwerkspeicher eines privaten ADSL Anschlusses einer Wohnung beziehen. Das ADSL Modem und der Netzwerkspeicher bleiben dabei ständig eingeschaltet und die verschlüsselten Daten können somit über die ADSL Verbindung jederzeit auf den Netzwerkspeicher übertragen werden. Sobald der Benutzer zuhause seinen Computer aufstartet, können die auf dem Netzwerkspeicher abgespeicherten verschlüsselten Daten auf den Computer des Benutzers übertragen werden. Oder an einem öffentlichen Standort wie beispielsweise einem Bahnhof mit einem WLAN Access Point, welcher über eine Luftschnittstelle mit einer Bandbreite von vielen Mbit/s verfügt, jedoch über eine Datenleitung mit nur wenigen Mbit/s an eine Netzwerkinfrastruktur angeschlossen ist, können beispielsweise in der Nacht grosse verschlüsselte Datenmengen an den WLAN Access Point übertragen und zwischengespeichert werden. Sobald der Benutzer am Morgen den WLAN Access Point am Bahnhof passiert, können verschlüsselte Daten über die leistungsfähige Luftschnittstelle an einen mobilen Computer des Benutzers übertragen werden. Ein solches Verfahren hat insbesondere den Vorteil, dass die Auslastung von Netzwerkinfrastrukturen optimiert werden kann. So kann die Übertragung von verschlüsselten Daten über eine ADSL Verbindung beispielsweise am Nachmittag erfolgen, zu einer Zeit in bei der noch wenig private Benutzer die Netzwerkinfrastruktur eines Internet Providers benützen. Ein lokales Netzwerk in einer Wohnung verfügt normalerweise über eine viel höhere Bandbreite als eine ADSL Verbindung. Die Übertragung vom Netzwerkspeicher auf den Computer des Benutzers dauert dementsprechend viel kürzer, als eine Übertragung über eine ADSL Verbindung. Für den beschriebenen Fall eines WLAN Access Points ergeben sich ähnliche Vorteile.

In einer anderen Ausführungsvariante wird bei der Übermittlung des mindestens einen Teils des elektronischen Schlüssels ein Geldwertbetrag von einem Benutzerkonto abgebucht. Ein solches Verfahren hat insbesondere den Vorteil, dass mittels der Übertragung von verschlüsselten Daten dem Benutzer verrechenbare Dienstleistungen, wie beispielsweise das zur Verfügung stellen von Audio- oder Videodateien oder irgendeine andere Datei oder irgendeine andere Dienstleistung, wie beispielsweise das Zwischenspeichern von Daten, die Verwaltung von Daten oder irgendeine andere Dienstleistung, angeboten werden können.

In einer weiteren Ausführungsvariante umfassen die verschlüsselten Daten einen Programmcode, welcher Programmcode zum Entschlüsseln der verschlüsselten Daten ausgeführt werden muss, wobei bei der Ausführung des Programmcodes Gültigkeitskriterien überprüft werden. So kann der Programmcode beispielsweise so ausgestaltet sein, dass die Gültigkeit des Schlüssels in Bezug auf eine Zeitmessung, auf einen zentralen Server, mit welchem die Gültigkeit von Schlüsseln überwacht wird, oder gemäss irgendeinem anderen Verfahren überprüft werden. Ein solches Verfahren hat insbesondere den Vorteil, dass beispielsweise definiert werden kann, ab wann die verschlüsselten Daten nicht mehr verfügbar sind. Mit einem solchen Verfahren ist zudem die Kompatibilität mit aus dem DRM (DRM: Digital Rights Management) bekannten Verfahren gewährleistet.

In einer anderen Ausführungsvariante wird den Daten und/oder den verschlüsselten Daten eine Identifikation zugeordnet und die Authentisierungsdaten werden der Identifikation zugeordnet abgespeichert. Eine solche Identifikation kann beispielsweise als Resultat einer Hashfunktion der verschlüsselten Daten ausgestaltet sein. Ein solches Verfahren hat insbesondere den Vorteil, dass die Authentisierung für den Zugriff auf die verschlüsselten Daten auch in Bezug auf die verschlüsselten Daten unterschiedlich ausgestaltet werden kann.

### Kurze Beschreibung der Zeichnungen

Nachfolgend werden Ausführungsvarianten der vorliegenden Erfin-dung anhand von Beispielen beschrieben. Die Beispiele der Ausführungen wer-den durch folgende beigelegten Figuren illustriert:
Figur 1 zeigt ein Blockdiagramm mit den einzelnen Bestandteilen zur Verschlüsselung von Daten und zur selektierbaren Übermittlung der verschlüsselten Daten.
Figur 2 zeigt ein Blockdiagramm mit den einzelnen Bestandteilen zur Authentisierung und Entschlüsselung der verschlüsselten Daten.
Figur 3 zeigt ein Blockdiagramm wie in Figur 1, wobei ein Schlüssel S auf ein zweites Kommunikationsendgerät mPh übertragen wird.
Figur 4 zeigt ein Blockdiagramm wie in Figur 2, wobei der Schlüssel S vom zweiten Kommunikationsendgerät mPh auf ein erstes Kommunikationsendgerät oC übertragen wird.

### Weg(e) zur Ausführung der Erfindung

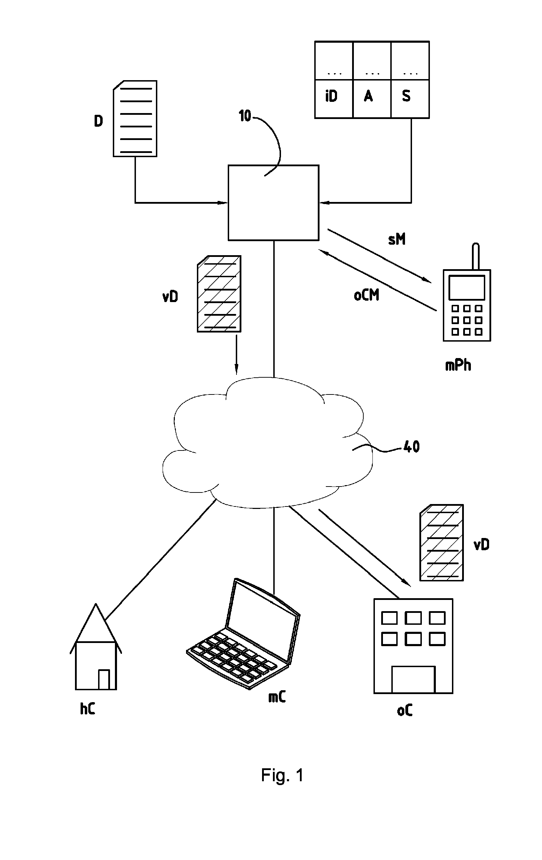

In Figur 1 bezieht sich das Bezugszeichen 10 auf ein Zentral modul. Das Zentralmodul 10 kann beispielsweise als Softwaremodul eines Netzwerkservers ausgestaltet sein. Selbstverständlich kann das Zentralmodul 10 auch vollständig als Hardwaremodul mit entsprechenden elektronischen Schaltkreisen ausgestaltet sein. In Figur 1 bezieht sich das Bezugszeichen D auf elektronische Daten. Die Daten D können irgendwelche elektronische Daten sein, beispielsweise E-Mail Nachrichten, Texte, Animationen, Audiodateien, Videodateien oder irgendwelche andere elektronische Daten. In Figur 1 bezieht sich das Bezugszeichen A auf Authentisierungsdaten und das Bezugszeichen S bezieht sich auf einen elektronischen Schlüssel. Die Authentisierungsdaten A können beispielsweise einen Benutzernamen und ein Passwort oder eine Passphrase umfassen. Der elektronische Schlüssel S kann beispielsweise einen symmetrischen elektronischen Schlüssel mit einem secret key oder einen asymmetrischen elektronischen Schlüssel mit einem public key und einem private key umfassen. Die Authentisierungsdaten A werden dem elektronischen Schlüssel S zugeordnet abgespeichert, beispielsweise indem das Zentral modul 10 eine entsprechende Tabelle umfasst. Die Authentisierungsdaten A und der elektronische Schlüssel S können zudem einer Identifikation iD der Daten zugeordnet abgespeichert werden, sodass die Authentisierungsdaten A und der elektronische Schlüssel S nur in Bezug auf Daten, welche durch die Identifikation iD der Daten identifizierbar sind, gültig sind. Selbstverständlich können auch in Bezug auf die Identifikation iD der Daten entsprechende Tabellen im Zentralmodul 10 vorgesehen sein. Mittels des elektronischen Schlüssels S sowie eines Verschlüsselungsmoduls des Zentralmoduls 10 können Daten D verschlüsselt werden. Eine solche Verschlüsselung kann sich auf irgendeinen Verschlüsselungsalgorithmus beziehen, beispielsweise auf einen DES Algorithmus (DES: Data Encryption Standard), auf einen PGP Algorithmus (PGP: Pretty Good Privacy), auf einen IDEA Algorithmus (IDEA: International Data Encryption Standard) oder auf irgendeinen anderen Verschlüsselungsalgorithmus. Durch die Verschlüsselung der Daten D werden verschlüsselte Daten vD erzeugt.

In Figur 1 bezieht sich das Bezugszeichen mPh auf ein erstes Kommunikationsendgerät. Das erste Kommunikationsendgerät kann ein Mobilfunktelefon, ein mobiler Computer oder irgendein anderes Kommunikationsendgerät sein. In Figur 1 bezieht das Bezugszeichen sM auf eine Signalisierungsmeldung. Die Signalisierungsmeldung kann eine Meldung gemäss dem SMS Standard (SMS: Short Message Service), gemäss dem USSD Standard (USSD: Unstructured Supplementary Service Data), gemäss dem SS7 Standard (SS7: Signaling System #7), gemäss dem SIP Standard (SIP: Session Initiation Protocol) oder eine Meldung gemäss irgendeinem anderen Standard oder gemäss irgendeinem anderen Format sein. Mit der Signalisierungsmeldung sM wird dem ersten Kommunikationsendgerät mPh die Verfügbarkeit von Daten D oder von verschlüsselten Daten vD signalisiert. Die Signalisierungsmeldung sM kann über irgendein Kommunikationsnetzwerk, beispielsweise über ein Mobilfunknetzwerk, über ein drahtloses Funknetzwerk, über ein drahtbasiertes Datennetzwerk wie ein Ethernet Netzwerk oder über irgendein anderes Kommunikationsnetzwerk, an das erste Kommunikationsendgerät mPh übertragen werden. So kann die Signalisierungsmeldung sM Informationen bezüglich der Verfügbarkeit von E-Mail Nachrichten, Audiodaten, Videodaten oder irgendwelchen anderen Daten umfassen. Solche Informationen können beispielsweise den Titel, den Absender, den Autor, die Betreffzeile oder irgendwelche andere Informationen zur Identifikation von Daten D oder zur Identifikation von verschlüsselten Daten vD betreffen. Die Signalisierungsmeldung sM kann auf dem ersten Kommunikationsgerät mPh ausgewertet werden und es können auf einem Display des ersten Kommunikationsendgeräts dem Benutzer entsprechende Informationen über die Verfügbarkeit von Daten oder von verschlüsselten Daten angezeigt werden. Zugleich können auf dem Display Informationen bezüglich zweiter Kommunikationsendgeräte hC,mC,oC angezeigt werden. Informationen bezüglich zweiter Kommunikationsendgeräte hC,mC,oC können zusammen mit der Signalisierungsmeldung sM auf das erste Kommunikationsendgerät mPh übertragen werden oder diese Informationen können vorgängig auf dem ersten Kommunikationsendgerät mPh abgespeichert worden sein. Ein zweites Kommunikationsendgerät hC,mC,oC kann beispielsweise ein Computer wie ein Notebook oder ein PDA (PDA: Personal Digital Assistant), ein mobiles Telefon, eine Spielkonsole, ein fest installierter Computer oder irgendein anderes Kommunikationsendgerät sein. Die Bezeichnung hC bezieht sich beispielsweise auf einen Computer des Benutzers zu Hause, die Bezeichnung mC bezieht sich beispielsweise auf einen mobilen Computer des Benutzers und die Bezeichnung oC bezeichnet beispielsweise einen Computer in einem Office an einem Arbeitsplatz des Benutzers. Mittels einer Eingabevorrichtung des ersten Kommunikationsendgeräts, also beispielsweise einer Tastatur, einer Maus, einem Joystick oder irgendeiner anderen Eingabevorrichtung, kann der Benutzer eines der zweiten Kommunikationsendgeräte hC,mC,oC auswählen, beispielsweise das zweite Kommunikationsendgerät oC. Mittels eines Übertragungsmoduls des zweiten Kommunikationsendgeräts mPh kann eine entsprechende Meldung oCM an das Zentralmodul 10 übermittelt werden. Eine solche Meldung kann durch ein Übertragungsmodul des Zentralmoduls 10 ausgewertet werden und die verschlüsselten Daten vD können anschliessend mittels des Übertragungsmoduls des Zentralmoduls 10 an das entsprechende zweite Kommunikationsendgerät oC übertragen werden. Als zweites Kommunikationsendgerät sind allerdings auch Drucker, Beamer oder irgendwelche andere Geräte verwendbar, welche beispielsweise nicht im Besitz des Benutzers sind und welche vom Benutzer beispielsweise nur temporär während einer Präsentation genutzt werden. So kann mittels der entsprechenden Selektion durch das erste Kommunikationsendgeräts mPh eine Präsentation als verschlüsselte Daten vD auf einen Computer übertragen werden, welcher einem Beamer zugeordnet ist. Sobald der Benutzer die Präsentation starten möchte, kann durch eine entsprechende Übertragung des Schlüssels S die Präsentation entschlüsselt und mit dem Beamer präsentiert werden. Durch ein solches Verfahren ist gewährleistet, dass beim Start der Präsentation alle Daten verfügbar sind und dass die Daten nur dem berechtigten Benutzer zugänglich sind, dies insbesondere ohne dass der Benutzer einen eigenen mobilen Computer mitnehmen muss. Eine solche Übertragung einer Präsentation an einen einem Beamer zugeordneten Computer ist insbesondere für sehr grosse Datenmengen, wie beispielsweise einer Videodatei, interessant.

In Figur 1 bezieht sich das Bezugszeichen 40 auf ein Kommunikationsnetzwerk. Das Kommunikationsnetzwerk kann sich beispielsweise auf das Internet beziehen und kann aus verschiedenen Netzwerken unterschiedlicher Technologien aufgebaut sein. So kann das Kommunikationsnetzwerk GSM-Netzwerke, UMTS-Netzwerke, WLAN-Netzwerke, Ethernet-Netzwerke, UWB-Netzwerke oder irgendwelche anderen Netzwerke umfassen. Wie in Figur 1 gezeichnet, sind das Zentralmodul 10 und das zweite Kommunikationsendgerät hC,mC,oC insbesondere mit dem Kommunikationsnetzwerk 40 verbindbar. Mittels des Kommunikationsnetzwerks 40 wird die beschriebene Übertragung von verschlüsselten Daten vD an ein zweites Kommunikationsendgerät hC,mC,oC ermöglicht. Es gibt verschiedenste Möglichkeiten, um Daten D somit als verschlüsselte Daten vD auf dem zweiten Kommunikationsendgerät hC,mC,oC abzuspeichern. So können E-Mail Nachrichten, Texte, Animationen, Audiodateien, Videodateien oder irgendwelche andere Daten als verschlüsselte E-Mail Nachrichten, verschlüsselte Texte, verschlüsselte Animationen, verschlüsselte Audiodateien oder verschlüsselte Videodateien auf dem zweiten Kommunikationsendgerät hC,mC,oC abgespeichert werden. Es ist allerdings so, dass die verschlüsselten Daten vD noch nutzlos sein können, da der Schlüssel zum Entschlüsseln der verschlüsselten Daten vorerst nur auf dem Zentralmodul 10 abgespeichert ist.

Die Übertragung der Signalisierungsmeldung sM auf das erste Kommunikationsendgerät mPh und/oder die Übertragung der verschlüsselten Daten vD auf das zweite Kommunikationsendgerät hC,mC,oC kann zu irgendeinem günstigen Zeitpunkt erfolgen. So kann sich ein günstiger Zeitpunkt auf das Eintreffen von neuen E-Mail Nachrichten, auf die Verfügbarkeit von Texten oder auf die Publikation einer neuen Audiodatei beziehen. Ein günstiger Zeitpunkt kann sich aber auch auf die Verfügbarkeit einer Kommunikationsverbindung zwischen dem Kommunikationsnetzwerk 40 und dem zweiten Kommunikationsendgerät hC,mC,oC, auf die Auslastung des Kommunikationsnetzwerks 40, auf die Auslastung von Teilen des Kommunikationsnetzwerks 40, auf einen Zeitpunkt welcher durch eine Eingabe des Benutzers an einem der Kommunikationsendgeräte erfolgt oder auf irgendeinen anderen Zeitpunkt beziehen.

Die Übertragung der verschlüsselten Daten vD kann auch gemäss verschiedener Szenarien erfolgen. So kann ein Szenario sein, dass die verschlüsselten Daten vD zu irgendeinem Zeitpunkt über eine breitbandige Kommunikationsverbindung, wie beispielsweise einer Ethernet Verbindung, in der Nacht auf das zweite Kommunikationsendgerät hC,mC,oC übertragen werden. Ein solches Szenario kann beispielsweise gewählt werden, um eine sehr grosse verschlüsselte Videodatei, wie beispielsweise in der Grössenordnung von 5 GByte, auf das zweite Kommunikationsendgerät hC,mC,oC zu übertragen. Oder in einem anderen Szenario können verschlüsselte Daten auf das zweite Kommunikationsendgerät mC übertragen werden, sobald der Benutzer mit diesem zweiten Kommunikationsendgerät mC in den Wirkungsbereich eines drahtlosen Kommunikationsnetzwerks, wie beispielsweise eines WLAN Netzwerks oder eines UWB Netzwerks in einem Bahnhof oder in einem Flughafengelände, kommt. Ein solches Szenario kann beispielsweise gewählt werden, um einem Benutzer vor dem Besteigen des Zugs verschlüsselte E-Mail Nachrichten oder verschlüsselte Texte auf sein zweites Kommunikationsendgerät mC zu übertragen. Je nach Netzwerkinfrastruktur hat der Kanal zwischen dem zweiten Kommunikationsendgerät und dem drahtlosen Kommunikationsnetzwerk eine viel höhere Bandbreite als der Kanal zwischen dem drahtlosen Kommunikationsnetzwerk und dem Backbone des Service-Providers. Obwohl Daten zwar vom zweiten Kommunikationsendgerät mit einer hohen Geschwindigkeit empfangen werden könnten, kann der Kanal zum Backbone zu einer starken Beschränkung der Empfangsgeschwindigkeit führen. Für ein solches Szenario ist es von Vorteil, verschlüsselte Daten schon vorzeitig, also beispielsweise während der Nacht, vom Backbone auf einen im drahtlosen Kommunikationsnetzwerk angeordneten Zwischenspeicher zu übertragen. Sobald beispielsweise am Morgen das zweite Kommunikationsendgerät mC in den Wirkungsbereich des drahtlosen Kommunikationsnetzwerks gebracht wird, lassen sich insbesondere über eine UWB Netzwerk grosse Datenmengen von verschlüsselten Daten in kurzer Zeit auf das zweite Kommunikationsendgerät übertragen. Es sei hier erwähnt, dass sich verschlüsselte Texte beispielsweise auf die aktuelle elektronische Tagesausgabe einer Tageszeitung beziehen können.

Je nach Anwendung ist zum Zeitpunkt der Verschlüsselung schon bekannt, über welche Merkmale das zweite Kommunikationsendgerät hC,mC,oC verfügt. So kann sich das zweite Kommunikationsendgerät beispielsweise auf einen mobilen Computer mit einer üblichen VGA-Bildschirmauflösung von 1024x768 Pixel beziehen. Für ein solches zweites Kommunikationsendgerät hC,mC,oC macht es keinen Sinn, beispielsweise eine Videodatei in einer sehr viel höheren Bildschirmauflösung bereitzustellen. Dementsprechend kann vor der Verschlüsselung der Daten mittels des Schlüssel S eine Transformation der Daten D durchgeführt werden, sodass die Daten D schon besser an das zweite Kommunikationsendgerät angepasst sind, auf welchem die Daten dargestellt werden sollen. Selbstverständlich kann eine solche Transformation der Daten nur dann durchgeführt werden, falls eine entsprechende Information über das zweite Kommunikationsendgerät vorliegt. Eine solche Information kann beispielsweise in einem Benutzerprofil abgespeichert sein.

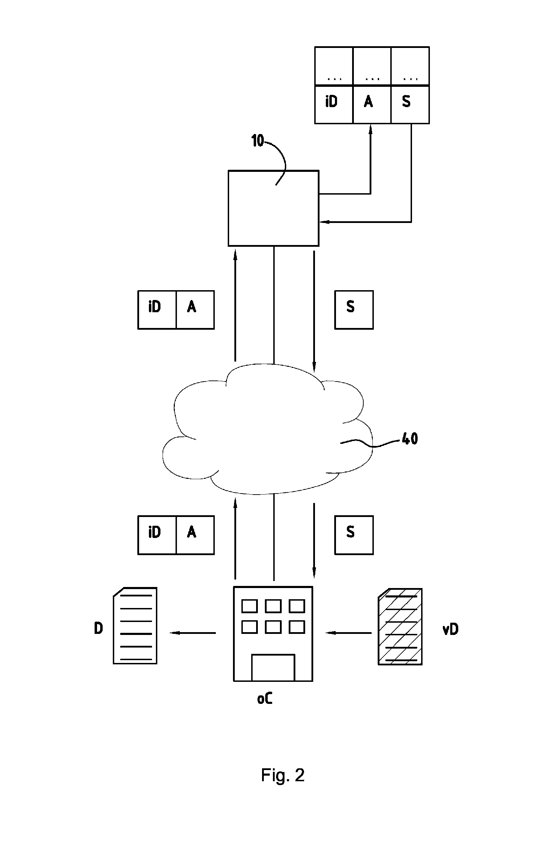

In Figur 2 werden die in Figur 1 eingeführten Bezugszeichen beibehalten. Wie in Figur 2 gezeichnet, werden Authentisierungsdaten A vom zweiten Kommunikationsendgerät hC,mC,oC an das Zentralmodul 10 übertragen. In Figur 2 ist der Fall mit dem zweiten Kommunikationsendgerät oC skizziert. Damit wird die Berechtigung am elektronischen Schlüssel S authentisiert. Anschliessend werden zumindest Teile des elektronischen Schlüssels S vom Zentral modul 10 auf das zweite Kommunikationsendgerät hC,mC,oC übertragen. Mittels des elektronischen Schlüssels S können die auf dem Kommunikationsendgerät abgespeicherten verschlüsselten Daten vD entschlüsselt werden, auf dem Kommunikationsendgerät als Daten D abgespeichert werden, wobei der Benutzer auf diese Daten D zugreifen kann.

Eine Authentisierung der Berechtigung am elektronischen Schlüssel S kann gemäss bekannten Verfahren erfolgen. Solche Verfahren können Passwort basiert, Passphrasen basiert, mittels einer SecurelD Karte erfolgen (SecurelD: Authentisierungsverfahren der Firma RSA Security), auf der Erfassung von biometrischen Merkmalen basieren oder auf einem beliebigen anderen Berechtigungsnachweis basieren.

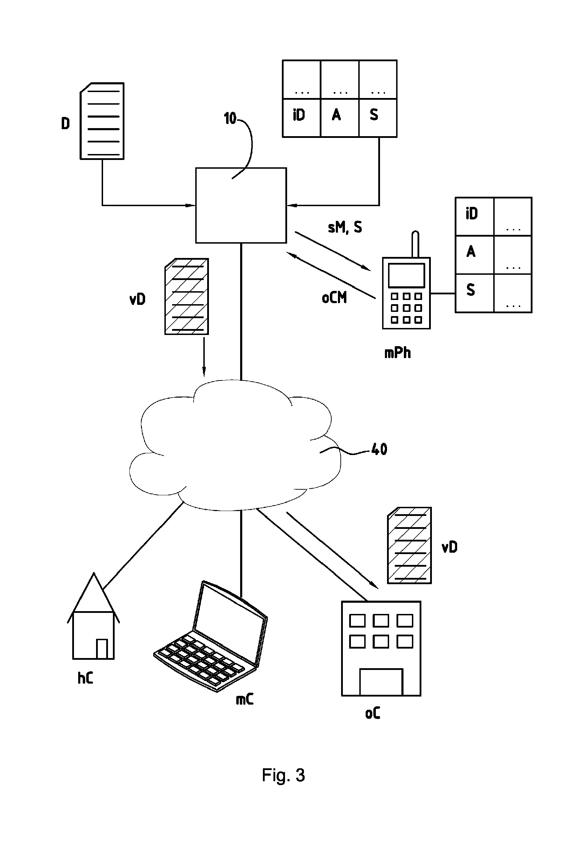

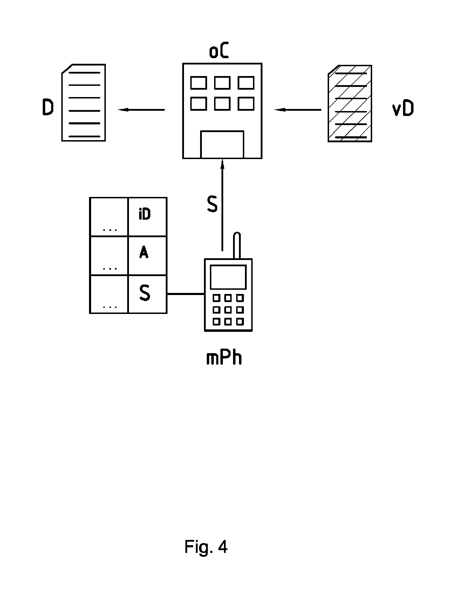

Alternativ kann der elektronische Schlüssel S wie in Figur 3 und Figur 4 gezeigt auf das zweite Kommunikationsendgerät hC,mC,oC übertragen werden. Sobald die Daten D in verschlüsselte Daten vD verschlüsselt werden, kann der dazu verwendete Schlüssel S an das erste Kommunikationsendgerät mPh übermittelt werden. Dies ist insbesondere sinnvoll, falls das erste Kommunikationsendgerät mPh ein in einem Mobilfunknetz eingebuchtes, und damit authentisiertes, Mobilfunkendgerät ist. Der elektronische Schlüssel S steht dem Benutzer des Mobilfunkendgeräts zur Verfügung. Die verschlüsselten Daten werden anschliessend gemäss der Selektion des Benutzers auf ein zweites Kommunikationsendgerät hC,mC,oC übertragen. Sobald der Benutzer das entsprechende zweite Kommunikationsendgerät verwendet, kann beispielsweise über eine lokale drahtlose Verbindung, beispielsweise eine Bluetooth-Verbindung oder irgendeine andere lokale Verbindung, zwischen dem Mobilfunkendgerät und dem zweiten Kommunikationsendgerät hC,mC,oC der Schlüssel S vom Mobilfunkendgerät auf das zweite Kommunikationsendgerät hC,mC,oC übertragen werden, worauf die auf dem zweiten Kommunikationsendgerät hC,mC,oC abgespeicherten verschlüsselten Daten vD in Daten D entschlüsselt werden können, und worauf der Benutzer mittels des zweiten Kommunikationsendgeräts hC,mC,oC auf die Daten D zugreifen kann.

Wie in Figur 1 bis 4 durch die punktierten Felder angedeutet, kann die Identifikation iD, die Authentisierungsdaten A sowie der Schlüssel S in einer Tabelle mit solchen Tupel abgespeichert werden. Dabei können für unterschiedliche Anwendungen auch unterschiedliche Tupel verwendet werden. So kann beispielsweise ein erstes Tupel dazu verwendet werden, um jeweils Videodaten, wie beispielsweise die neuesten Kinohits, für ein bestimmtes zweites Endgerät, wie beispielsweise einen Home Computer eines Benutzers, zu verschlüsseln. Oder ein zweites Tupel kann dazu verwendet werden, um dieselben Videodaten für einen mobilen Computer des Benutzers zu verschlüsseln. So können zwar dieselbe Identifikation iD und dieselben Authentisierungsdaten verwendet werden. Hingegen kann der Schlüssel S dem jeweiligen Endgerät angepasst gewählt werden, sodass für den Home Computer und für den mobilen Computer jeweils ein Schlüssel mit beispielsweise unterschiedlichen Sicherheitsanforderungen verwendet werden kann.

Die erwähnten Benutzerprofile können derart ausgestaltet sein, dass diese durch das erste Kommunikationsgerät mPh jeweils dynamisch nachgeführt werden. So kann bei einer Selektion eines zweiten Kommunikationsendgeräts hC,mC,oC das Benutzerprofil derart dynamisch nachgeführt werden, dass bei einer Signalisierungsmeldung sM, welche sich auf gleiche oder ähnliche Daten bezieht, jeweils auch das gleiche oder ein ähnliches zweites Kommunikationsendgerät hC,mC,oC für die Übertragung von verschlüsselten Daten vD selektiert wird. Durch ein solches Benutzerprofil kann für bestimmte Daten D insbesondere definiert werden, welche Aufbereitung der Daten D erfolgen soll, welcher Schlüssel S verwendet werden soll und an welches zweite Kommunikationsendgerät hC,mC,oC, beispielsweise bei einem Fehlen einer entsprechenden Identifikation durch das erste Kommunikationsendgerät mPh, die verschlüsselten Daten vD übertragen werden sollen.

## Patentansprüche

1. Verfahren zur selektierbaren Datenübertragung, **dadurch gekennzeichnet, dass** Authentisierungsdaten (A) und ein elektronischer Schlüssel (S) erzeugt werden, wobei der elektronische Schlüssel (S) den Authentisierungsdaten (A) zugeordnet abgespeichert wird,dass mittels eines Verschlüsselungsmoduls eines Zentralmoduls (10) und mittels mindestens eines Teils des elektronischen Schlüssels (S) Daten (D) verschlüsselt werden,dass mittels eines Übertragungsmoduls des Zentralmoduls (10) eine Signalisierungsmeldung (sM) an ein erstes Kommunikationsendgerät (mPh) übertragen wird,dass mittels des ersten Kommunikationsendgeräts (mPh) ein zweites Kommunikationsendgerät (hC,mC,oC) selektiert wird, wobei eine Identifikation des selektierten zweiten Kommunikationsendgeräts (hC,mC,oC) an das Übertragungsmodul des Zentralmoduls (10) übertragen wird,dass die verschlüsselten Daten (vD) durch das Übertragungsmodul des Zentralmoduls (10) basierend auf der Identifikation des selektierten zweiten Kommunikationsendgeräts an das zweite Kommunikationsendgerät (hC,mC,oC) übertragen werden, dass aufgrund einer Übertragung von Authentisierungsdaten zwischen dem ersten und/oder dem zweiten und/oder einem dritten Kommunikationsendgerät und einem Authentisierungsmodul des Zentralmoduls (10) mindestens ein Teil des elektronischen Schlüssels (S) auf das zweite Kommunikationsendgerät (hC,mC,oC) übertragen wird, unddass mittels eines Entschlüsselungsmoduls des zweiten Kommunikationsendgeräts (hC,mC,oC) und mittels des mindestens einen Teils des elektronischen Schlüssels (S) die verschlüsselten Daten (vD) entschlüsselt werden.

2. Verfahren nach Anspruch 1, **dadurch gekennzeichnet, dass** der elektronische Schlüssel (S) basierend auf der an das Übertragungsmodul des Zentralmoduls (10) übertragenen Identifikation des zweiten Kommunikationsgeräts (hC,mC,oC) erzeugt wird und/oder dass basierend auf der an das Übertragungsmodul des Zentralmoduls (10) übertragenen Identifikation des zweiten Kommunikationsgeräts (hC,mC,oC) ein Verschlüsselungsalgorithmus des Verschlüsselungsmoduls selektiert wird.

3. Verfahren nach einem der Ansprüche 1 bis 2, **dadurch gekennzeichnet, dass** der mindestens eine Teil des elektronischen Schlüssels (S) über eine Kommunikationsverbindung zwischen dem Zentralmodul (10) und dem ersten Kommunikationsendgerät (mPh) sowie über eine Kommunikationsverbindung zwischen dem ersten Kommunikationsendgerät (mPh) und dem zweiten Kommunikationsendgerät (hC,mC,oC) übertragen wird.

4. Verfahren nach einem der Ansprüche 1 bis 3, **dadurch gekennzeichnet, dass** im Zentralmodul (10) ein Benutzerprofil abgespeichert wird, wobei Daten (D) gemäss dem Benutzerprofil verschlüsselt werden und/oder verschlüsselte Daten (vD) gemäss dem Benutzerprofil auf ein zweites Kommunikationsendgerät (hC,mC,oC) übertragen werden.

5. Verfahren nach einem der Ansprüche 1 bis 4, **dadurch gekennzeichnet, dass** mittels eines Verfügbarkeitsmoduls des Zentralmoduls (10) die Verfügbarkeit des zweiten Kommunikationsendgeräts (hC,mC,oC) überprüft wird und dass die verschlüsselten Daten (vD) bei Verfügbarkeit des zweiten Kommunikationsendgeräts (hC,mC,oC) an das zweite Kommunikationsendgerät (hC,mC,oC) übertragen werden.

6. Verfahren nach einem der Ansprüche 1 bis 5, **dadurch gekennzeichnet, dass** die verschlüsselten Daten (vD) an ein Netzwerkgerät einer Netzwerkinfrastruk tur übertragen werden, wobei die verschlüsselten Daten (vD) auf dem Netzwerkgerät abgespeichert werden und asynchron vom Netzwerkgerät an das zweite Kommunikationsendgerät (hC,mC,oC) übertragen werden.

7. Verfahren nach einem der Ansprüche 1 bis 6, **dadurch gekennzeichnet, dass** bei der Übermittlung des mindestens einen Teils des elektronischen Schlüssels (S) ein Geldwertbetrag von einem Benutzerkonto abgebucht wird.

8. Verfahren nach einem der Ansprüche 1 bis 7, **dadurch gekennzeichnet, dass** die verschlüsselten Daten (vD) einen Programmcode umfassen, welcher Programmcode zum Entschlüsseln der verschlüsselten Daten (vD) ausgeführt werden muss, wobei bei der Ausführung des Programmcodes Gültigkeitskriterien überprüft werden.

9. Verfahren nach einem der Ansprüche 1 bis 8, **dadurch gekennzeichnet, dass** den Daten (D) und/oder den verschlüsselten Daten (vD) eine Identifikation (iD) zugeordnet wird und dass die Authentisierungsdaten (A) der Identifikation (iD) zugeordnet abgespeichert werden.

10. System zur selektierbaren Datenübertragung, **dadurch gekennzeichnet, dass** Authentisierungsdaten (A) und ein elektronischer Schlüssel (S) erzeugbar sind, wobei der elektronische Schlüssel (S) den Authentisierungsdaten (A) zugeordnet abspeicherbar ist,dass ein Verschlüsselungsmodul eines Zentralmoduls (10) eingerichtet ist, um mittels mindestens eines Teils des elektronischen Schlüssels (S) Daten (D) zu verschlüsseln, dass ein Übertragungsmodul des Zentralmoduls (10) eingerichtet ist, um eine Signalisierungsmeldung (sM) an ein erstes Kommunikationsendgerät (mPh) zu übertragen,dass das erste Kommunikationsendgerät (mPh) eingerichtet ist, um ein zweites Kommunikationsendgerät (hC,mC,oC) zu selektieren, wobei eine Identifikation des selektierten zweiten Kommunikationsendgeräts (hC,mC,oC) an das Übertragungsmodul des Zentralmoduls (10) übertragbar ist,dass die verschlüsselten Daten (vD) durch das Übertragungsmodul des Zentralmoduls (10) basierend auf der Identifikation des selektierten zweiten Kommunikationsendgeräts an das zweite Kommunikationsendgerät (hC,mC,oC) übertragbar sind, dass ein Authentisierungsmodul des Zentralmoduls (10) eingerichtet ist, um aufgrund einer Übertragung von Authentisierungsdaten zwischen dem ersten und/oder dem zweiten und/oder einem dritten Kommunikationsendgerät und dem Authentisierungsmodul des Zentralmoduls (10) mindestens ein Teil des elektronischen Schlüssels (S) auf das zweite Kommunikationsendgerät (hC,mC,oC) zu übertragen, unddass ein Entschlüsselungsmodul des zweiten Kommunikationsendgeräts (hC,mC,oC) eingerichtet ist, um mittels des mindestens einen Teils des elektronischen Schlüssels (S) die verschlüsselten Daten (vD) zu entschlüsseln.

11. System nach Anspruch 10, **dadurch gekennzeichnet, dass** der elektronische Schlüssel (S) basierend auf der an das Übertragungsmodul des Zentralmoduls (10) übertragenen Identifikation des zweiten Kommunikationsgeräts (hC,mC,oC) erzeugbar ist und/oder dass basierend auf der an das Übertragungsmodul des Zentralmoduls (10) übertragenen Identifikation des zweiten Kommunikationsgeräts (hC,mC,oC) ein Verschlüsselungsalgorithmus des Verschlüsselungsmoduls selektierbar ist.

12. System nach einem der Ansprüche 10 bis 11, **dadurch gekennzeichnet, dass** der mindestens eine Teil des elektronischen Schlüssels (S) über eine Kommunikationsverbindung zwischen dem Zentralmodul (10) und dem ersten Kommunikationsendgerät (mPh) sowie über eine Kommunikationsverbindung zwischen dem ersten Kommunikationsendgerät (mPh) und dem zweiten Kommunikationsendgerät (hC,mC,oC) übertragbar ist.

13. System nach einem der Ansprüche 10 bis 12, **dadurch gekennzeichnet, dass** im Zentralmodul (10) ein Benutzerprofil abspeicherbar ist, wobei Daten (D) gemäss dem Benutzerprofil verschlüsselbar sind und/oder verschlüsselte Daten (vD) gemäss dem Benutzerprofil auf ein zweites Kommunikationsendgerät (hC,mC,oC) übertragbar sind.

14. System nach einem der Ansprüche 10 bis 13, **dadurch gekennzeichnet, dass** ein Verfügbarkeitsmodul des Zentralmoduls (10) eingerichtet ist, um die Verfügbarkeit des zweiten Kommunikationsendgeräts (hC,mC,oC) zu überprüfen, wobei die verschlüsselten Daten (vD) bei Verfügbarkeit des zweiten Kommunikationsendgeräts (hC,mC,oC) an das zweite Kommunikationsendgerät (hC,mC,oC) übertragbar sind.

15. System nach einem der Ansprüche 10 bis 14, **dadurch gekennzeichnet, dass** die verschlüsselten Daten (vD) an ein Netzwerkgerät einer Netzwerkinfrastruktur übertragbar sind, wobei die verschlüsselten Daten (vD) auf dem Netzwerkgerät abgespeicherbar sind und asynchron vom Netzwerkgerät an das zweite Kommunikationsendgerät (hC,mC,oC) übertragbar sind.

16. System nach einem der Ansprüche 10 bis 15, **dadurch gekennzeichnet, dass** bei der Übermittlung des mindestens einen Teils des elektronischen Schlüssels (S) ein Geldwertbetrag von einem Benutzerkonto abbuchbar ist.

17. System nach einem der Ansprüche 10 bis 16, **dadurch gekennzeichnet, dass** die verschlüsselten Daten (vD) einen Programmcode umfassen, welcher Programmcode zum Entschlüsseln der verschlüsselten Daten (vD) zwingend ausführbar ist, wobei bei der Ausführung des Programmcodes Gültigkeitskriterien überprüfbar sind.

18. System nach einem der Ansprüche 10 bis 17, **dadurch gekennzeichnet, dass** den Daten (D) und/oder den verschlüsselten Daten (vD) eine Identifikation (iD) zuordenbar ist und dass die Authentisierungsdaten (A) der Identifikation (iD) zugeordnet abspeicherbar ist.

## Geänderte Patentansprüche

### Geänderte Patentansprüche gemäss Regel 137(2) EPÜ.

**1.** Verfahren zur selektierbaren Datenübertragung, wobei Authentisierungsdaten (A) und ein elektronischer Schlüssel (S) erzeugt werden und der elektronische Schlüssel (S) den Authentisierungsdaten (A) zugeordnet in einem Zentralmodul (10) abgespeichert wird, wobei mittels eines Verschlüsselungsmoduls des Zentralmoduls (10) und mittels mindestens eines Teils des elektronischen Schlüssels (S) elektronische Daten (D) verschlüsselt und verschlüsselte Daten (vD) erzeugt werden, **dadurch gekennzeichnet,**
**dass** aufgrund der verschlüsselten Daten (vD) mittels eines Übertragungsmoduls des Zentralmoduls (10) eine Signalisierungsmeldung (sM) an ein erstes Kommunikationsendgerät (mPh) übertragen wird,
**dass** mittels des ersten Kommunikationsendgeräts (mPh) ein zweites Kommunikationsendgerät (hC,mC,oC) selektiert wird, wobei eine Identifikation des selektierten zweiten Kommunikationsendgeräts (hC,mC,oC) an das Übertragungsmodul des Zentralmoduls (10) übertragen wird,
**dass** die verschlüsselten Daten (vD) durch das Übertragungsmodul des Zentralmoduls (10) basierend auf der Identifikation des selektierten zweiten Kommunikationsendgeräts an das zweite Kommunikationsendgerät (hC,mC,oC) übertragen werden, dass aufgrund einer Übertragung von Authentisierungsdaten zwischen einem Authentisierungsmodul des Zentralmoduls (10) und dem ersten Kommunikationsendgerät (mPh) und/oder dem zweiten Kommunikationsendgerät (hC,mC,oC) und/oder einem dritten Kommunikationsendgerät mindestens ein Teil des elektronischen Schlüssels (S) auf das zweite Kommunikationsendgerät (hC,mC,oC) übertragen wird, und
**dass** mittels eines Entschlüsselungsmoduls des zweiten Kommunikationsendgeräts (hC,mC,oC) und mittels des mindestens einen Teils des elektronischen Schlüssels (S) die verschlüsselten Daten (vD) entschlüsselt werden.

**10.** System zur selektierbaren Datenübertragung, wobei Authentisierungsdaten (A) und ein elektronischer Schlüssel (S) erzeugbar sind und der elektronische Schlüssel (S) den Authentisierungsdaten (A) zugeordnet in einem Zentralmodul (10) abspeicherbar ist, wobei
ein Verschlüsselungsmodul des Zentralmoduls (10) eingerichtet ist, um mittels mindestens eines Teils des elektronischen Schlüssels (S) elektronische Daten (D) zu verschlüsseln und verschlüsselte Daten (vD) zu erzeugen, **dadurch gekennzeichnet, dass** ein Übertragungsmodul des Zentralmoduls (10) eingerichtet ist, um aufgrund der verschlüsselten Daten (vD) eine Signalisierungsmeldung (sM) an ein erstes Kommunikationsendgerät (mPh) zu übertragen,
dass das erste Kommunikationsendgerät (mPh) eingerichtet ist, um ein zweites Kommunikationsendgerät (hC,mC,oC) zu selektieren, wobei eine Identifikation des selektierten zweiten Kommunikationsendgeräts (hC,mC,oC) an das Übertragungsmodul des Zentralmoduls (10) übertragbar ist,
dass die verschlüsselten Daten (vD) durch das Übertragungsmodul des Zentralmoduls (10) basierend auf der Identifikation des selektierten zweiten Kommunikationsendgeräts an das zweite Kommunikationsendgerät (hC,mC,oC) übertragbar sind, dass ein Authentisierungsmodul des Zentralmoduls (10) eingerichtet ist, um aufgrund einer Übertragung von Authentisierungsdaten zwischen einem Authentisierungsmodul des Zentralmoduls (10) und dem ersten Kommunikationsendgerät (mPh) und/oder dem zweiten Kommunikationsendgerät (hC,mC,oC) und/oder einem dritten Kommunikationsendgerät mindestens ein Teil des elektronischen Schlüssels (S) auf das zweite Kommunikationsendgerät (hC,mC,oC) zu übertragen, und
dass ein Entschlüsselungsmodul des zweiten Kommunikationsendgeräts (hC,mC,oC) eingerichtet ist, um mittels des mindestens einen Teils des elektronischen Schlüssels (S) die verschlüsselten Daten (vD) zu entschlüsseln.
